# EUROPÄISCHE PATENTSCHRIFT

(11) **EP 3 363 232 B1**
(45) Veröffentlichungstag und Bekanntmachung des Hinweises auf die Patenterteilung: **05.05.2021**
(21) Anmeldenummer: 16769901.6
(22) Anmeldetag: 12.09.2016
(51) Int. Cl.: H04W 28/02, H04W 84/00, H04L 12/801, H04W 72/04, H04W 74/08, H04L 12/841

(54) **VERFAHREN UND VORRICHTUNG ZUR KONFIGURATION EINER DATENÜBERTRAGUNG ÜBER EINEN ÜBERTRAGUNGSKANAL EINES DRAHTLOSEN KOMMUNIKATIONSSYSTEMS MIT DEZENTRALER ÜBERLASTREGELUNG**
METHOD AND APPARATUS FOR CONFIGURING A DATA TRANSMISSION VIA A TRANSMISSION CHANNEL OF A WIRELESS COMMUNICATION SYSTEM WITH LOCAL OVERLOAD CONTROL
PROCÉDÉ ET DISPOSITIF PERMETTANT LA CONFIGURATION D'UNE TRANSMISSION DE DONNÉES PAR UN CANAL DE TRANSMISSION D'UN SYSTÈME DE COMMUNICATION SANS FIL AVEC UNE RÉGULATION DE SURCHARGE DÉCENTRALISÉE

(30) Priorität: 13.10.2015 DE 102015219785
(43) Veröffentlichungstag der Anmeldung: 22.08.2018
(73) Patentinhaber: VOLKSWAGEN AKTIENGESELLSCHAFT, 38440 Wolfsburg (DE)
(72) Erfinder: BUBURUZAN, Teodor, 38118 Braunschweig (DE)
(86) Internationale Anmeldenummer: PCT/EP2016/071393
(87) Internationale Veröffentlichungsnummer: WO 2017/063801

(56) Entgegenhaltungen:
- Etsi: "Intelligent Transport Systems (ITS); Cross Layer DCC Management Entity for operation in the ITS G5A and ITS G5B medium; Report on Cross layer DCC algorithms and performance evaluation TECHNICAL REPORT TR101 612 V1.1.1", , 30. September 2014 (2014-09-30), Seiten 1-57, XP055327472, Gefunden im Internet: URL:http://www.etsi.org/deliver/etsi_tr/10 1600_101699/101612/01.01.01_60/tr_101612v0 10101p.pdf [gefunden am 2016-12-08]
- Dcc Workshop ET AL: "CAR 2 CAR Communication Consortium th 2012 ETSI DCC Standardization Activities Report of the ETSI STF 420/447 activities", , 11. Juli 2012 (2012-07-11), XP055327491, Gefunden im Internet: URL:http://www.eurecom.fr/en/publication/3 821/download/cm-publi-3821.pdf [gefunden am 2016-12-08]
- Zheyuan Liu: "Evaluation of platoon Application Enabled by Contemporary ETSI ITS-G5 Standards Content", , 25. Juni 2015 (2015-06-25), XP055327542, Halmstad, Sweden Gefunden im Internet: URL:http://www.diva-portal.se/smash/get/di va2:862533/FULLTEXT01.pdf [gefunden am 2016-12-08]
- ETSI: "Intelligent Transport Systems (ITS); Decentralized Congestion Control Mechanisms for Intelligent Transport Systems operating in the 5 GHz range; Access layer part", ETSI TS 102687 V1.1.1 (2011-07) TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE , Bd. ITS WG4, Nr. V1.1.1 1. Juli 2011 (2011-07-01), Seiten 1-45, XP002754240, Gefunden im Internet: URL:https://www.etsi.org/deliver/etsi_ts/1 02600_102699/102687/01.01.01_60/ts_102687v 010101p.pdf [gefunden am 2016-02-12]

## Beschreibung

Die Erfindung betrifft ein Verfahren und eine Vorrichtung zur Konfiguration einer Datenübertragung über einen Übertragungskanal eines drahtlosen Kommunikationssystems mit dezentraler Überlastregelung, sowie ein Fahrzeug und ein Computerprogrammprodukt.

Die Steuerung von Datenverkehr oder Nachrichten ist Kommunikationsnetzwerken ein wichtiger Punkt, um die Zuverlässigkeit und Effizienz zu erhöhen oder zu gewährleiten. Auch bei C2C (Car-to-Car) Netzwerken ist dies ein wichtiger Punkt, da sicherheitsrelevante Informationen mit niedriger Latenz und hoher Zuverlässigkeit auch in Situationen mit hoher Fahrzeugdichte und/oder Geschwindigkeit übertragen werden müssen.

Bei derzeitigen Ansätzen solcher Kommunikations- oder Kooperationsnetzwerke gelangt ein gemeinsam genutztes Übertragungsmedium, das heißt alle Teilnehmer oder Fahrzeuge nutzen den gleichen Übertragungskanal, in einem ad-hoc Netzwerk ohne zentrale Steuerung zum Einsatz. Deshalb wird oftmals eine dezentrale Überlastregelung DCC (Decentralised Congestion Control) vorgeschlagen. Aufgrund der hohen Mobilität der Teilnehmer muss die dezentrale Überlastregelung Situationen mit sich schnell ändernden Kanallasten verarbeiten können.

ETSI TS 102 687 beschreibt Grundlagen der dezentralen Überlastregelung DCC mit vier Mechanismen, der Leistungssteuerung, der Übertragungsratensteuerung, der Empfindlichkeitssteuerung und der Datenratensteuerung. Die Unterteilung in entspannte, aktivierte und eingeschränkte Zustände wird beschrieben.

ETSI TS 102 724 beschreibt Überlastregelungsprofile DP (DCC Profile).

DE 10 2012 208 645 A1 und DE 10 2013 205 058 A1 offenbaren ein Verfahren zum Betreiben einer stationären Einrichtung, bei der eine Adresszuordnung gemäß ermittelter geographischer Position erfolgt.

DE 10 2013 013 621 A1 offenbart einen sicherheitskonformen Kanalwechsel in intelligenten Transportsystemen, wobei der Kanalwechsel in Abhängigkeit von einem Konfliktrisiko mit anderen Verkehrsteilnehmern vorgenommen wird.

DE 10 2014 201 648 A1 offenbart ein Verfahren zur Kommunikation innerhalb eines nach Art des ad-hoc zusammenwirkenden, insbesondere Drahtlos-Kraftfahrzeugkommunikationssystems, bei dem eine Bestimmung der eigenen Position auf der aktuellen Fahrspur erfolgt. ETSI TR 101 612 V1.1.1 (2014-09) offenbart eine Leistungsprüfung von reaktiven und linear adaptiven DCC Mechanismen. Der reaktive Ansatz basiert beispielsweise auf einem entspannten, fünf aktiven und einem eingeschränkten DCC Zustand, wobei jeder aktive Zustand einer Einschränkung des nutzbaren Rtx im Kanal zugeordnet ist, und der linear adaptive Ansatz eine Zielvorgabe CL setzt und dann den Rtx positiv oder negativ anpasst, um die Zielvorgabe CL zu erreichen.

ETSI TR 101 613 V1 .1 .1 (2015-09) beschreibt eine Validierungsvorrichtung und Ergebnisse für eine schichtübergreifende DCC Management Einheit zum Betrieb in einem ITS G5A und ITS G5B Medium unter Einsatz eines entspannten, fünf aktiven und eines eingeschränkten DCC Zustands.

Bansal, G. et al.; "Comparing LIMERIC and DCC Approaches for VANET Channel Congestion Control", in: IEEE Wireless Vehicular Communications (WiVeC) 2014, Seiten 1-7, September 2014, vergleicht LIMERIC und DCC Ansätze zur Kanalüberlastregelung in IEEE 802.11 p-basierten Fahrzeugen und ad-hoc Netzwerken.

Der Erfindung liegt nun die Aufgabe zugrunde, den Datenverkehr eines drahtlosen Kommunikationssystems mit dezentraler Überlastregelung zu verbessern.

Diese Aufgabe wird gelöst durch ein Verfahren gemäß Anspruch1, eine Vorrichtung gemäß Anspruch 10, ein Fahrzeug gemäß Anspruch 12 beziehungsweise ein Computerprogrammprodukt gemäß Anspruch 13.

Das erfindungsgemäße Verfahren zur Konfiguration einer Datenübertragung über einen Übertragungskanal eines drahtlosen Kommunikationssystems mit dezentraler Überlastregelung, wobei die dezentrale Überlastregelung einen entspannten Zustand, einen eingeschränkten Zustand und fünf aktivierte Zustände umfasst, deren Einteilung auf einer Kanallast in dem Übertragungskanal basiert.

Der Übertragungskanal kann einen oder mehrere physikalische Kanäle und/oder logische Kanäle, wie Kontroll- oder Servicekanäle, umfassen. Die Kanallast gibt die Last oder Beladung des Übertragungskanals durch Daten oder Nachrichten an und wird in Prozent angegeben. Der Prozentwert der Kanallast ist dann der belegte Anteil von der gesamten Bandbreite, die 100 Prozent entspricht, des Kanals.

Das erfindungsgemäße Verfahren hat den Vorteil, dass die Leistungsfähigkeit insbesondere unter schwierigen Bedingungen hinsichtlich der Paketfehlerrate, von Paketkollisionen und der Paketübermittlungsverzögerung oder -latenz verbessert wird. Es hat sich gezeigt, dass die Vorgabe von fünf aktivierten Zuständen dazu führt, dass die Zustände nur relativ selten gewechselt werden, obwohl die Bandbreite jedes der fünf aktivierten Zustände schmaler ist als der üblicherweise nur eine vorgesehene aktivierte Zustand. Durch die geringere Anzahl an Wechseln, beziehungsweise der häufigere Verbleib der dezentralen Überlastregelung in einem der aktiven Zustände kann die Effizienz der Datenübertragung erhöht werden.

Jeder der fünf aktivierten Zustände kann für eine Kanallast von sechs Prozent bis zehn Prozent, vorzugsweise acht Prozent, definiert werden. Diese Bandbreite hat sich während Tests als besonders vorteilhaft gezeigt.

Vorteilhaft kann vorgesehen sein, dass der entspannte Zustand (Rel) für eine Kanallast von 0 Prozent bis kleiner 17 bis 21 Prozent definiert ist, dass ein erster aktivierter Zustand für eine Kanallast von 17 bis 21 Prozent bis kleiner 25 bis 29 Prozent definiert ist, dass ein zweiter aktivierter Zustand für eine Kanallast von 25 bis 29 Prozent bis kleiner 33 bis 37 Prozent definiert ist, dass ein dritter aktivierter Zustand für eine Kanallast von 33 bis 37 Prozent bis kleiner 41 bis 45 Prozent definiert ist, dass ein vierter aktivierter Zustand für eine Kanallast von 41 bis 45 Prozent bis kleiner 49 bis 53 Prozent definiert ist, dass ein fünfter aktivierter Zustand für eine Kanallast von 49 bis 53 Prozent bis kleiner 57 bis 61 Prozent definiert ist und dass der eingeschränkte Zustand für eine Kanallast von größer gleich 57 bis 61 Prozent definiert ist. Diese weitere Spezifikation aller Zustände erlaubt eine sehr gute Überlastregelung.

Weiter kann vorteilhaft vorgesehen sein, dass der entspannte Zustand (Rel) für eine Kanallast von größer gleich 0 Prozent bis kleiner 19 Prozent definiert ist, dass ein erster aktivierter Zustand für eine Kanallast von größer gleich 19 Prozent bis kleiner 27 Prozent definiert ist, dass ein zweiter aktivierter Zustand für eine Kanallast von größer gleich 27 Prozent bis kleiner 35 Prozent definiert ist, dass ein dritter aktivierter Zustand für eine Kanallast von größer gleich 35 Prozent bis kleiner 43 Prozent definiert ist, dass ein vierter aktivierter Zustand für eine Kanallast von größer gleich 43 Prozent bis kleiner 51 Prozent definiert ist, dass ein fünfter aktivierter Zustand für eine Kanallast von größer gleich 51 Prozent bis kleiner 59 Prozent definiert ist und dass der eingeschränkte Zustand für eine Kanallast von größer gleich 59 Prozent definiert ist. Auch diese weitere Spezifikation aller Zustände erlaubt eine sehr gute Überlastregelung.

Jedem der Zustände wird ein spezifisches Datenübertragungsintervall geordnet. Das Datenübertragungsintervall wird üblicherweise in Millisekunden (ms) bemessen und gibt den Zeitraum an, ab dem die nächste Nachricht oder die nächsten Daten über den Übertragungskanal geschickt werden dürfen. Anders ausgedrückt, gibt das Datenübertragungsintervall die Pause zwischen zwei Sendungen beziehungsweise zwischen zwei Zugriffen auf den Übertragungskanal an, in der der Teilnehmer nicht auf den Übertragungskanal zugreifen darf.

Es kann vorgesehen sein, dass das Datenübertragungsintervall für den entspannten Zustand 40 bis 80, vorzugsweise 60 ms, für einen ersten aktivierten Zustand 80 bis 120, vorzugsweise 100 ms, für einen zweiten aktivierten Zustand 160 bis 200, vorzugsweise 180 ms, für einen dritten aktivierten Zustand 240 bis 280, vorzugsweise 260 ms, für einen vierten aktivierten Zustand 320 bis 360, vorzugsweise 340 ms, für einen fünften aktivierten Zustand 400 bis 440, vorzugsweise 420 ms und für den eingeschränkten Zustand 440 bis 480, vorzugsweise 460 ms beträgt. Es hat sich gezeigt, dass diese ansteigenden Datenübertragungsintervalle sehr gute Ergebnisse liefern.

Vier Überlastregelungsprofile sind vorgesehen, wobei jedem Überlastregelungsprofil ein spezifisches Datenübertragungsintervall für jeden Zustand zugeordnet wird. Durch die Überlastregelungsprofile wird gewissermaßen eine zweite Dimension für die dezentrale Überlastregelung eingeführt, was die Effizienz und die Flexibilität erhöht. Neben den vier Überlastregelungsprofile kann ein fünftes Überlastregelungsprofil zum Durchleiten anderer Dienste wie zum Beispiel von einem Smartphone definiert werden. Durch die Überlastregelungsprofile können bestimmte Teilnehmer und/oder Dienste oder Typen von Daten oder Nachrichten priorisiert oder mit weniger Priorität behandelt werden.

Einem ersten Überlastregelungsprofil wird für jeden Zustand dasselbe minimale spezifische Datenübertragungsintervall zugeordnet. Das minimale Datenübertragungsintervall wird dabei der minimal möglichen Latenz des Kommunikationssystems, also Sender, Übertragungsstrecke und/oder Empfänger, entsprechen. So steht ein Überlastregelungsprofil zur Verfügung, das eine besonders priorisierte Übertragung erlaubt, zum Beispiel für sehr relevante Informationen wie bei einem Unfallereignis.

Es kann vorgesehen sein, dass einem ersten Überlastregelungsprofil für jeden Zustand ein Datenübertragungsintervall von 100 ms zugeordnet wird, dass einem zweiten und dritten Überlastregelungsprofil für den entspannten Zustand ein Datenübertragungsintervall von 100 ms zugeordnet wird, für einen ersten aktivierten Zustand ein Datenübertragungsintervall von 140 ms zugeordnet wird, für einen zweiten aktivierten Zustand ein Datenübertragungsintervall von 180 ms zugeordnet wird, für einen dritten aktivierten Zustand ein Datenübertragungsintervall von 220 ms zugeordnet wird, für einen vierten aktivierten Zustand ein Datenübertragungsintervall von 260 ms zugeordnet wird, für einen fünften aktivierten Zustand ein Datenübertragungsintervall von 300 ms zugeordnet wird und für den eingeschränkten Zustand ein Datenübertragungsintervall von 340 ms zugeordnet wird und dass einem vierten Überlastregelungsprofil für den entspannten Zustand ein Datenübertragungsintervall von 100 ms zugeordnet wird, für einen ersten aktivierten Zustand ein Datenübertragungsintervall von 350 ms zugeordnet wird, für einen zweiten aktivierten Zustand ein Datenübertragungsintervall von 600 ms zugeordnet wird, für einen dritten aktivierten Zustand ein Datenübertragungsintervall von 850 ms zugeordnet wird, für einen vierten aktivierten Zustand ein Datenübertragungsintervall von 1100 ms zugeordnet wird, für einen fünften aktivierten Zustand ein Datenübertragungsintervall von 1350 ms zugeordnet wird und für den eingeschränkten Zustand ein Datenübertragungsintervall von 1600 ms zugeordnet wird. Diese weitere Spezifikation aller Überlastregelungsprofile erlaubt eine sehr gute Überlastregelung.

Über ein erstes und/oder zweites Überlastregelungsprofil können Decentralized Environment Notification Messages (DENM) Nachrichten gesendet werden und/oder über ein drittes Überlastregelungsprofil können Cooperative Awareness Message (CAM) Nachrichten gesendet werden. Gemäß dem Verfahren können unterschiedliche Nachrichtentypen des Fahrzeug-zu-X Netzwerks in Abhängigkeit von ihrer Wichtigkeit und/oder Dringlichkeit unterschiedlich behandelt und übertragen werden. Dies erlaubt eine Erhöhung von Effizienz und Sicherheit.

Das drahtlose Kommunikationssystem kann ein ad-hoc Netzwerk für die Kommunikation von mobilen Geräten sein, insbesondere ein Netzwerk nach einem WLAN-Standard. Die beschriebene dezentrale Überlastregelung eignet sich für derartige Netzwerke besonders.

Das drahtlose Kommunikationssystem kann ein ITS G5 Netzwerk sein. Das ITS (Intelligent Transportation System) G5 Netzwerk wird für diese Zwecke definiert und eignet sich daher besonders.

Die erfindungsgemäße Vorrichtung zur Konfiguration einer Datenübertragung über einen Übertragungskanal eines drahtlosen Kommunikationssystems mit dezentraler Überlastregelung sieht vor, dass die Vorrichtung, insbesondere ein Steuergerät für ein Fahrzeug oder ein Mobilfunkgerät, eingerichtet ist, ein wie zuvor beschriebenes Verfahren durchzuführen. Insbesondere bei Fahrzeuge und Mobilfunkgeräten verspricht das Verfahren aufgrund der hohen Mobilität und/oder Geschwindigkeit der Teilnehmer besondere Vorteile bei der zuverlässigen Datenübertragung. Es gelten die gleichen Vorteile und Modifikationen wie zuvor beschrieben.

Das erfindungsgemäße Fahrzeug umfasst eine Vorrichtung wie zuvor beschrieben. Es gelten die gleichen Vorteile und Modifikationen wie zuvor beschrieben.

Das erfindungsgemäße Computer-Programmprodukt umfasst Programmcode zur Durchführung des zuvor beschriebenen Verfahrens, wenn das Programmprodukt auf einer Recheneinheit oder einer zuvor beschriebenen Vorrichtung ausgeführt wird. Es gelten die gleichen Vorteile und Modifikationen wie zuvor beschrieben.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines drahtlosen Kommunikationssystems mit dezentraler Überlastregelung;
- Figur 2: eine Konfigurationstabelle einer dezentralen Überlastregelung; und
- Figur 3: eine weitere Konfigurationstabelle einer dezentralen Überlastregelung.

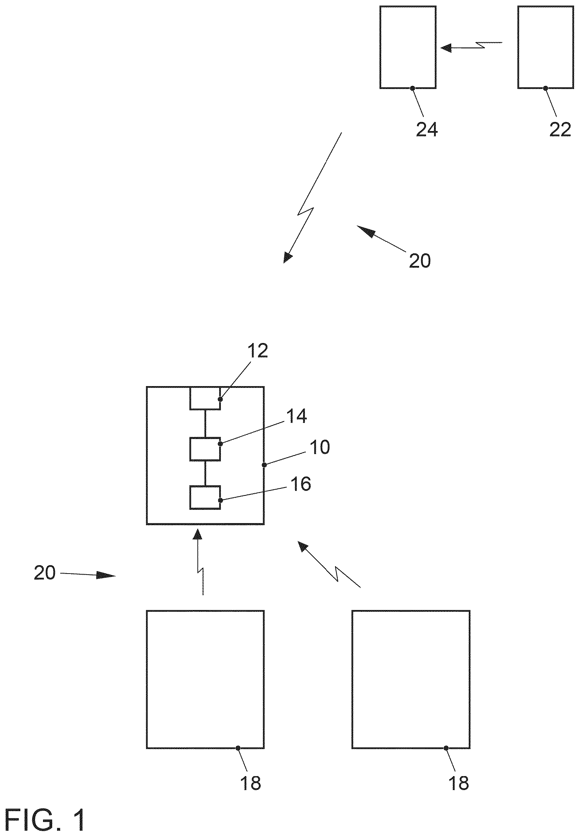

Figur 1 zeigt ein Mobilgerät, hier in diesem Beispiel in Form eines Fahrzeugs 10, wie zum Beispiel einem PKW, LKW, Motorrad, Bus oder Bahn. Als Fahrzeug werden hier sämtliche Land-, Luft- und Wasserfahrzeuge angesehen. Das Mobilgerät kann auch ein mobiler Computer, wie zum Beispiel ein Tablet, oder ein Mobiltelefon, wie zum Beispiel ein Smartphone sein.

Das Fahrzeug 10 enthält eine Kommunikationseinheit 12, die in drahtloser oder drahtgebundener Kommunikation mit einem Steuergerät 14 des Fahrzeugs steht. Die Kommunikationseinheit 12 ist zum Beispiel eine Sende/Empfangseinheit für ein V2X-Kommunikation spezifiziertes WLAN gemäß dem IEEE 802.11p Standard.

Das Steuergerät 14 kann ein dediziertes Steuergerät zum Beispiel für Kommunikationsdienste oder ein Car-to-X-System sein. Auch kann das Steuergerät eine Recheneinheit wie zum Beispiel ein Mikroprozessor sein. Des Weiteren umfasst das Fahrzeug 10 beziehungsweise das Steuergerät 14 eine dezentrale Überlastregelung 16, beziehungsweise einen Teiler einer dezentralen Überlastregelung. Die dezentrale Überlastregelung 16 dient dazu, Sendeeigenschaften der Kommunikationseinheit 12 zu konfigurieren beziehungsweise zu steuern.

Die Kommunikationseinheit 12 dient zum Aufbau einer Verbindung und/oder der Kommunikation zwischen dem Fahrzeug 10 und weiteren Fahrzeugen 18, die identisch oder ähnlich zu dem Fahrzeug 10 sind, um so die Teilnahme an einem Kommunikationsdienst 20 zu ermöglichen. Die weiteren Fahrzeuge 18 enthalten ein oder mehrere Steuergeräte sowie eine Kommunikationseinheit. Der Kommunikationsdienst 20 ist zum Beispiel ein V2X oder Vehicle-to-X Dienst oder ein Mobilfunkdienst. Derartige Dienste werden zum Beispiel als Car-to-Car-Systeme, Car-to-Infrastructure-Systeme oder Car-to-X-Systeme bezeichnet, wobei das X als Platzhalter für beliebige Infrastruktureinrichtungen, andere Fahrzeuge und andere Verkehrsteilnehmer steht. Weitere übliche Bezeichnungen sind Car2C-, Car2X-, C2C- bzw. C2X-Systeme, Vehicle-to-Vehicle-Systeme (V2V), Vehicle-to-Infrastructure-Systeme (V2I) oder Vehicle-to-X-Systeme (V2X).

Der Kommunikationsdienst 20 hat mindestens einen gemeinsam, das heißt von allen Teilnehmern beziehungsweise Fahrzeugen, genutzten oder nutzbaren Übertragungskanal. Der Kommunikationsdienst 20 ist ein ad-hoc Netzwerk, das heißt ein Netzwerk ohne zentrale Steuerung, bei dem sich die Teilnehmer, wie die Fahrzeuge 10 und 18, beliebig an- und abmelden können. Insbesondere ist der Kommunikationsdienst 20 ein für Car-to-X-Systeme entwickeltes ITS G5 Netzwerk.

Die Fahrzeuge 18 kommunizieren direkt mit dem Fahrzeug 10. Ebenso ist es möglich das weitere Fahrzeuge, wie zum Beispiel das Fahrzeug 22, indirekt über zum Beispiel eine Installation 24 kommunizieren. Die Installation 24 kann auch eine andere stationäre Einrichtung, wie ein Infrastruktureinheit, zum Beispiel eine Ampel oder ein Sendemast, oder ein weiteres Fahrzeug sein.

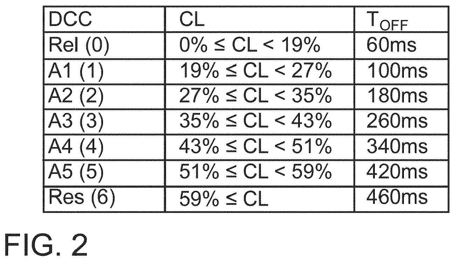

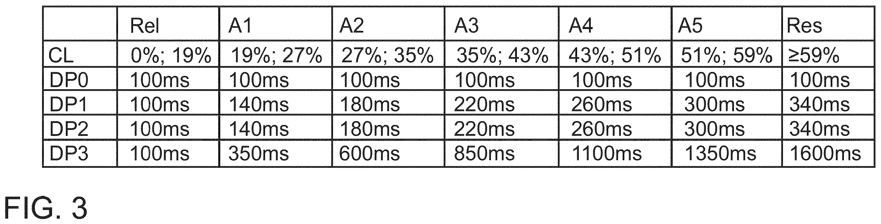

Anhand der Figuren 2 und 3 wird nun die Funktionsweise der dezentralen Überlastregelung 16 beschrieben, die zum Beispiel in dem Steuergerät 14 des Fahrzeugs 10 ausgeführt wird.

In Figur 2 ist eine Konfigurationstabelle einer dezentralen Überlastregelung 16 dargestellt. Die dezentrale Überlastregelung 16 umfasst insgesamt sieben Zustände, einen entspannten Zustand Rel, einen ersten aktivierten Zustand A1, einen zweiten aktivierten Zustand A2, einen dritten aktivierten Zustand A3, einen vierten aktivierten Zustand A4, einen fünften aktivierten Zustand A5 und einen eingeschränkten Zustand Res umfasst, deren Einteilungen auf einer Kanallast CL in dem Übertragungskanal basieren. In dem entspannten Zustand Rel ist die dezentrale Überlastregelung 16 nicht aktiv, dort ist die Kanallast sehr niedrig. In den aktivierten Zuständen A1 bis A5 ist die dezentrale Überlastregelung 16 aktiv, da eine, teils erhebliche (hier bis zu 59%), Kanallast CL vorliegt. In dem eingeschränkten Zustand Res ist die Kanallast CL so groß, dass ein normaler Betrieb nur schwer aufrechtzuerhalten ist.

Es hat sich gezeigt, dass eine Kanallast oder ein anteiliger Wert von 8% der Bandbreite des Übertragungskanals beziehungsweise der Kanallast optimal für einen aktivierten Zustand A1 bis A5 ist. Der erste aktivierte Zustand A1 setzt bei 19 % Kanallast ein. Die hier gewählten 0 bis kleiner 19 % Kanallast für den entspannten Zustand Rel haben sich als gut dimensioniert für einen freien Betrieb und einen sanften Übergang zwischen dem entspannten Zustand Rel und den aktivierten Zuständen erwiesen.

Weiter ist vorgesehen, dass der zweite aktivierte Zustand A2 für eine Kanallast CL von größer gleich 27 Prozent bis kleiner 35 Prozent definiert ist, dass der dritte aktivierte Zustand A3 für eine Kanallast von größer gleich 35 Prozent bis kleiner 43 Prozent definiert ist, dass der vierte aktivierte Zustand A4 für eine Kanallast von größer gleich 43 Prozent bis kleiner 51 Prozent definiert ist, dass der fünfte aktivierte Zustand A5 für eine Kanallast von größer gleich 51 Prozent bis kleiner 59 Prozent definiert ist und dass der eingeschränkte Zustand Res für eine Kanallast von größer gleich 59 Prozent definiert ist.

Anhand der Kanallast CL, die entweder vom Teilnehmer gemessen oder diesem mitgeteilt wird, wird jeder Teilnehmer beziehungsweise die Kommunikationseinheit 12 des Teilnehmers in einen Zustand der dezentralen Überlastregelung 16 gesetzt.

Mit der Zuordnung zu einem der Zustände der dezentralen Überlastregelung 16 wird für den Teilnehmer ein spezifisches Datenübertragungsintervall T_{OFF} angegeben, das definiert wie lange der Teilnehmer nicht auf den Übertragungskanal zugreifen darf.

Hier beträgt das Datenübertragungsintervall T_{OFF} für den entspannten Zustand Rel 60 ms, für den ersten aktivierten Zustand A1 100 ms, für den zweiten aktivierten Zustand A2 180 ms, für den dritten aktivierten Zustand A3 260 ms, für den vierten aktivierten Zustand A4 340 ms, für den fünften aktivierten Zustand A5 420 ms und für den eingeschränkten Zustand Res 460 ms. Durch die abgestufte Wahl des Datenübertragungsintervalls T_{OFF} wird eine Priorisierung eingestellt, durch welche die Wiederholfrequenz des Zugriffs auf den Übertragungskanal durch den Teilnehmer geregelt wird.

In Figur 3 ist eine weitere Tabelle einer dezentralen Überlastregelung 16 dargestellt. Die Tabellen aus den Figuren 2 und 3 können zum Beispiel in einem Speicher des Teilnehmers, zum Beispiel in einem Steuergerät 14 eines Fahrzeugs 10 oder einem Register eines Mikroprozessors eines Smartphones.

Gemäß der Tabelle aus Figur 3 sind zusätzlich zu den Zuständen der dezentralen Überlastregelung 16 noch vier Überlastregelungsprofile DP0, DP1, DP2, DP3 vorgesehen, wobei jedem Überlastregelungsprofil DP0, DP1, DP2, DP3 ein spezifisches Datenübertragungsintervall für jeden Zustand Rel, A1-A5 und Res zugeordnet ist.

Einem Teilnehmer oder einem Daten- oder Nachrichtentyp kann ein Überlastregelungsprofil zugeordnet werden, dies kann dauerhaft oder temporär geschehen. Über das Profil wird eine zweite Dimension beziehungsweise ein zweiter Aspekt für eine Priorisierung bei der Übertragung oder dem Zugriff auf den Übertragungskanal eingeführt.

In diesem Beispiel wird dem ersten Überlastregelungsprofil DP0 für jeden Zustand ein minimales Datenübertragungsintervall von zum Beispiel 100 ms zugeordnet. Somit können Teilnehmer oder Nachrichten mit diesem Profil unabhängig von der Kanallast CL mit maximaler Frequenz auf den Übertragungskanal zugreifen.

Dem zweiten und dritten Überlastregelungsprofil DP 1 und DP2 sind für den entspannten Zustand Rel ein Datenübertragungsintervall von 100 ms zugeordnet, für den ersten aktivierten Zustand A1 ein Datenübertragungsintervall von 140 ms zugeordnet, für den zweiten aktivierten Zustand A2 ein Datenübertragungsintervall von 180 ms zugeordnet, für den dritten aktivierten Zustand A3 ein Datenübertragungsintervall von 220 ms zugeordnet, für den vierten aktivierten Zustand A4 ein Datenübertragungsintervall von 260 ms zugeordnet, für den fünften aktivierten Zustand A5 ein Datenübertragungsintervall von 300 ms zugeordnet und für den eingeschränkten Zustand Res ein Datenübertragungsintervall von 340 ms zugeordnet.

Dem vierten Überlastregelungsprofil DP3 ist für den entspannten Zustand Rel ein Datenübertragungsintervall von 100 ms zugeordnet, für den ersten aktivierten Zustand A1 ein Datenübertragungsintervall von 350 ms zugeordnet, für den zweiten aktivierten Zustand A2 ein Datenübertragungsintervall von 600 ms zugeordnet, für den dritten aktivierten Zustand A3 ein Datenübertragungsintervall von 850 ms zugeordnet, für den vierten aktivierten Zustand A4 ein Datenübertragungsintervall von 1100 ms zugeordnet, für den fünften aktivierten Zustand A5 ein Datenübertragungsintervall von 1350 ms zugeordnet und für den eingeschränkten Zustand Res ein Datenübertragungsintervall von 1600 ms zugeordnet.

Mit dieser Ausgestaltung wird sichergestellt, das bei immer höherer Kanallast nur die wichtigsten Nachrichten oder Daten über den Übertragungskanal übertragen werden. In dem Beispiel einer Car-2-X Kommunikation werden zum Bespiel Nachrichten einen Crash betreffen, wie zum Beispiel Signale zur Parametrierung von Airbags oder Gurtstraffern, dem Überlastregelungsprofil DP0 zugeordnet.

Zum Beispiel bei einer starken Bremsung, also in einer Situation, in der noch einige Sekunden Reaktionszeit verbleiben, werden Signale, zum Beispiel zur Erhöhung des Bremsdrucks, dem Überlastregelungsprofil DP1 zugeordnet.

Derartige Nachrichten oder Signale können als Decentralized Environment Notification Messages (DENM) Nachrichten angesehen werden.

Positionsmeldungen, die Informationen des Teilnehmers wie zum Beispiel Geschwindigkeit, Richtung und ähnliches enthalten und zyklisch, wie etwa alle 100 ms gesendet werden, können dem Überlastregelungsprofil DP2 zugeordnet werden. Diese Nachrichten können Cooperative Awareness Message (CAM) Nachrichten entsprechen.

Dem vierten Überlastregelungsprofil DP3 sind zum Beispiel Nachrichten von Komfortfunktionen zugeordnet, wie zum Beispiel ein Zugriff auf das Internet oder eine Statusmeldung einer Ampel. Wenn zum Beispiel die Meldung einer Ampel, dass diese noch eine Rotphase von einem bestimmten Zeitraum, zum Beispiel von sieben Sekunden, hat, um 1 Sekunde durch die dezentrale Überlastregelung 16 verzögert wird, kann der Empfänger eingerichtet sein, die Differenz zwischen angegebenem Zeitraum und Verzögerung zu berechnen. In diesem Beispiel wird dem empfangenen Teilnehmer mitgeteilt, dass die Rotphase noch sechs Sekunden andauert.

Ein oder mehrere, vorzugsweise nicht mehr als zwei, weitere Überlastregelungsprofile können vorgesehen sein, um zum Beispiel einen offenen Kanal für weitere Teilnehmer, wie zum Beispiel ein Smartphone, zur Verfügung zu stellen. Auf diese Weise kann das Kommunikationssystem, wenn nur wenig Bandbreite durch Systemdaten oder Systemnachrichten belegt ist, auch Bandbreite für systemexterne Teilnehmer anbieten. Die systemexternen Teilnehmer können über entsprechende Gateways oder Schnittstellen eingebunden werden.

### Bezugszeichenliste

- 10: Fahrzeug
- 12: Kommunikationseinheit
- 14: Steuergerät
- 16: dezentrale Überlastregelung
- 18: Fahrzeug
- 20: Kommunikationsdienst
- 22: Fahrzeug
- 24: Installation

- Rel: entspannter Zustand
- A1: erster aktivierter Zustand
- A2: zweiter aktivierter Zustand
- A3: dritter aktivierter Zustand
- A4: vierter aktivierter Zustand
- A5: fünfter aktivierter Zustand
- Res: eingeschränkter Zustand
- CL: Kanallast
- T_{OFF}: Datenübertragungsintervall
- DP0: Überlastregelungsprofil
- DP1: Überlastregelungsprofil
- DP2: Überlastregelungsprofil
- DP3: Überlastregelungsprofil

## Patentansprüche

1. Verfahren zur Konfiguration einer Datenübertragung über einen Übertragungskanal eines drahtlosen Kommunikationssystems (20) mit dezentraler Überlastregelung (16), wobei die dezentrale Überlastregelung (16) einen entspannten Zustand (Rel) einen eingeschränkten Zustand (Res) und fünf aktivierte Zustände (A1, A2, A3, A4, A5) umfasst, und wobei die Einteilung aller Zustände auf einer Kanallast (CL) in dem Übertragungskanal basiert, **dadurch gekennzeichnet, dass** vier Überlastregelungsprofile (DP0, DP1, DP2, DP3) für eine Priorisierung bei der Datenübertragung oder einem Zugriff auf dem Übertragungskanal vorgesehen sind, wobei jedem Überlastregelungsprofil (DP0, DP1, DP2, DP3) ein spezifisches Datenübertragunsintervall (T_{OFF}) für jeden Zustand zugeordnet wird, wobei das spezifische Datenübertragungsintervall die Pause zwischen zwei Sendungen beziehungsweise zwischen zwei Zugriffen auf den Übertragungskanal angibt, und wobei einem ersten Überlastregelungsprofil (DP0) für jeden Zustand dasselbe minimale spezifische Datenübertragunsintervall (T_{OFF}) zugeordnet wird.

2. Verfahren nach Anspruch 1, **dadurch gekennzeichnet, dass** jeder der fünf aktivierten Zustände (A1, A2, A3, A4, A5) für eine Kanallast (CL) von sechs Prozent bis zehn Prozent, vorzugsweise acht Prozent, definiert wird.

3. Verfahren nach einem der vorhergehenden Ansprüche, **dadurch gekennzeichnet, dass** der entspannte Zustand (Rel) für eine Kanallast (CL) von 0 Prozent bis kleiner 17 bis 21 Prozent definiert ist, dass ein erster der fünf aktivierten Zustände (A1) für eine Kanallast (CL) von 17 bis 21 Prozent bis kleiner 25 bis 29 Prozent definiert ist, dass ein zweiter der fünf aktivierten Zustände (A2) für eine Kanallast (CL) von 25 bis 29 Prozent bis kleiner 33 bis 37 Prozent definiert ist, dass ein dritter der fünf aktivierten Zustände (A3) für eine Kanallast (CL) von 33 bis 37 Prozent bis kleiner 41 bis 45 Prozent definiert ist, dass ein vierter der fünf aktivierten Zustände (A4) für eine Kanallast (CL) von 41 bis 45 Prozent bis kleiner 49 bis 53 Prozent definiert ist, dass ein fünfter der fünf aktivierten Zustände (A5) für eine Kanallast (CL) von 49 bis 53 Prozent bis kleiner 57 bis 61 Prozent definiert ist und dass der eingeschränkte Zustand (Res) für eine Kanallast (CL) von größer gleich 57 bis 61 Prozent definiert ist.

4. Verfahren nach den vorhergehenden Ansprüchen 1 und 2, **dadurch gekennzeichnet, dass** der entspannte Zustand (Rel) für eine Kanallast (CL) von größer gleich 0 Prozent bis kleiner 19 Prozent definiert ist, dass ein erster der fünf aktivierten Zustände (A1) für eine Kanallast (CL) von größer gleich 19 Prozent bis kleiner 27 Prozent definiert ist, dass ein zweiter der fünf aktivierten Zustände (A2) für eine Kanallast (CL) von größer gleich 27 Prozent bis kleiner 35 Prozent definiert ist, dass ein dritter der fünf aktivierten Zustände (A3) für eine Kanallast (CL) von größer gleich 35 Prozent bis kleiner 43 Prozent definiert ist, dass ein vierter der fünf aktivierten Zustände (A4) für eine Kanallast (CL) von größer gleich 43 Prozent bis kleiner 51 Prozent definiert ist, dass ein fünfter der fünf aktivierten Zustände (A5) für eine Kanallast (CL) von größer gleich 51 Prozent bis kleiner 59 Prozent definiert ist und dass der eingeschränkte Zustand (Res) für eine Kanallast (CL) von größer gleich 59 Prozent definiert ist.

5. Verfahren nach Anspruch 1, **dadurch gekennzeichnet, dass** das spezifische Datenübertragungsintervall (T_{OFF}) für den entspannten Zustand (Rel) 40 bis 80, vorzugsweise 60 ms, für einen ersten der fünf aktivierten Zustände (A1) 80 bis 120, vorzugsweise 100 ms, für einen zweiten der fünf aktivierten Zustände (A2) 160 bis 200, vorzugsweise 180 ms, für einen dritten der fünf aktivierten Zustände (A3) 240 bis 280, vorzugsweise 260 ms, für einen vierten der fünf aktivierten Zustände (A4) 320 bis 360, vorzugsweise 340 ms, für einen fünften der fünf aktivierten Zustände (A5) 400 bis 440, vorzugsweise 420 ms und für den eingeschränkten Zustand (Res) 440 bis 480, vorzugsweise 460 ms beträgt.

6. Verfahren nach einem der vorhergehenden Ansprüche, **dadurch gekennzeichnet, dass** dem ersten Überlastregelungsprofil (DPO) der vier Überlastregelungsprofile für jeden Zustand (Rel, A1, A2, A3, A4, A5, Res) ein Datenübertragungsintervall (T_{OFF}) von 100 ms zugeordnet wird, dass einem zweiten und dritten Überlastregelungsprofil (DP1, DP2) der vier Überlastregelungsprofile für den entspannten Zustand (Rel) ein Datenübertragungsintervall (T_{OFF}) von 100 ms zugeordnet wird, für einen ersten aktivierten Zustand (A1) der fünf aktivierten Zustände ein Datenübertragungsintervall (T_{OFF}) von 140 ms zugeordnet wird, für einen zweiten aktivierten Zustand (A2) der fünf aktivierten Zustände ein Datenübertragungsintervall (T_{OFF}) von 180 ms zugeordnet wird, für einen dritten aktivierten Zustand (A3) der fünf aktivierten Zustände ein Datenübertragungsintervall (T_{OFF}) von 220 ms zugeordnet wird, für einen vierten aktivierten Zustand (A4) der fünf aktivierten Zustände ein Datenübertragungsintervall (T_{OFF}) von 260 ms zugeordnet wird, für einen fünften aktivierten Zustand (A5) der fünf aktivierten Zustände ein Datenübertragungsintervall (T_{OFF}) von 300 ms zugeordnet wird und für den eingeschränkten Zustand (Res) ein Datenübertragungsintervall (T_{OFF}) von 340 ms zugeordnet wird, und dass einem vierten Überlastregelungsprofil (DP3) der vier Überlastregelungsprofile für den entspannten Zustand (Rel) ein Datenübertragungsintervall (T_{OFF}) von 100 ms zugeordnet wird, für einen ersten aktivierten Zustand (A1) der fünf aktivierten Zustände ein Datenübertragungsintervall (T_{OFF}) von 350 ms zugeordnet wird, für einen zweiten aktivierten Zustand (A2) der fünf aktivierten Zustände ein Datenübertragungsintervall (T_{OFF}) von 600 ms zugeordnet wird, für einen dritten aktivierten Zustand (A3) der fünf aktivierten Zustände ein Datenübertragungsintervall (T_{OFF}) von 850 ms zugeordnet wird, für einen vierten aktivierten Zustand (A4) der fünf aktivierten Zustände ein Datenübertragungsintervall (T_{OFF}) von 1100 ms zugeordnet wird, für einen fünften aktivierten Zustand (A5) der fünf aktivierten Zustände ein Datenübertragungsintervall (T_{OFF}) von 1350 ms zugeordnet wird und für den eingeschränkten Zustand (Res) ein Datenübertragungsintervall (T_{OFF}) von 1600 ms zugeordnet wird.

7. Verfahren nach einem der vorhergehenden Ansprüche, **dadurch gekennzeichnet, dass** über das erste und/oder ein zweites Überlastregelungsprofil (DPO, DP1) der vier Übertragungsprofile Decentralized Environment Notification Messages (DENM) Nachrichten gesendet werden und/oder dass über ein drittes Übertragungsprofil (DP2) der vier Überlastregelungsprofile Cooperative Awareness Message (CAM) Nachrichten gesendet werden.

8. Verfahren nach einem der vorhergehenden Ansprüche, **dadurch gekennzeichnet, dass** das drahtlose Kommunikationssystem (20) ein ad-hoc Netzwerk für die Kommunikation von mobilen Geräten ist.

9. Verfahren nach einem der vorhergehenden Ansprüche, **dadurch gekennzeichnet, dass** das drahtlose Kommunikationssystem (20) ein ITS G5 Netzwerk ist oder ein ad-hoc Netzwerk für die Kommunikation von mobilen Geräten nach einem WLAN-Standard ist.

10. Vorrichtung zur Konfiguration einer Datenübertragung über einen Übertragungskanal eines drahtlosen Kommunikationssystems (20) mit dezentraler Überlastregelung (16), **dadurch gekennzeichnet, dass** die Vorrichtung eingerichtet ist, ein Verfahren nach einem der Ansprüche 1 bis 9 durchzuführen.

11. Vorrichtung nach Anspruch 10, **dadurch gekennzeichnet, dass** die Vorrichtung ein Steuergerät (14) für ein Fahrzeug (10) oder ein Mobilfunkgerät ist.

12. Fahrzeug (10), umfassend eine Vorrichtung nach Anspruch 11 oder 11.

13. Computer-Programmprodukt mit Programmcode zur Durchführung des Verfahrens nach einem der Ansprüche 1 bis 9, wenn das Programmprodukt auf einer Recheneinheit oder einer Vorrichtung gemäß Anspruch 10 oder 11 ausgeführt wird.

## Claims

1. Method for configuring a data transmission via a transmission channel of a wireless communication system (20) with local overload control (16), wherein the local overload control (16) comprises a relaxed state (Rel), a restricted state (Res), and five activated states (A1, A2, A3, A4, A5), and wherein the classification of all states is based on a channel load (CL) in the transmission channel, **characterized in that** four overload control profiles (DPO, DP1, DP2, DP3) are provided for prioritizing in the data transmission or accessing the overload channel, wherein a specific data transmission interval (T_{OFF}) for each state is associated with each overload control profile (DP0, DP1, DP2, DP3); wherein the specific data transmission interval indicates the pause between two transmissions or between two accesses to the transmission channel; and wherein the same minimum specific data transmission interval (T_{OFF}) is associated with a first overload control profile (DP0) for each state.

2. Method according to claim 1, **characterized in that** each of the five activated states (A1, A2, A3, A4, A5) is defined for a channel load (CL) of six percent to ten percent, preferably of eight percent.

3. Method according to any of the preceding claims, **characterized in that** the relaxed state (Rel) is defined for a channel load (CL) from 0 percent to less than 17 to 21 percent; **in that** a first of the five activated states (A1) is defined for a channel load (CL) from 17 to 21 percent to less than 25 to 29; **in that** a second of the five activated states (A2) is defined for a channel load (CL) from 25 to 29 percent to less than 33 to 37 percent; **in that** a third of the five activated states (A3) is defined for a channel load (CL) from 33 to 37 percent to less than 41 to 45 percent; **in that** a fourth of the five activated states (A4) is defined for a channel load (CL) from 41 to 45 percent to less than 49 to 53 percent; **in that** a fifth of the five activated states (A5) is defined for a channel load (CL) from 49 to 53 percent to less than 57 to 61 percent; and **in that** the restricted state (Res) is defined for a channel load (CL) of greater than or equal to 57 to 61 percent.

4. Method according to the preceding claims 1 and 2, **characterized in that** the relaxed state (Rel) is defined for a channel load (CL) from greater than or equal to 0 percent to less than 19 percent; **in that** a first of the five activated states (A1) is defined for a channel load (CL) from greater than or equal to 19 percent to less than 27 percent; **in that** a second of the five activated states (A2) is defined for a channel load (CL) from greater than or equal to 27 percent to less than 35 percent **in that** a third of the five activated states (A3) is defined for a channel load (CL) from greater than or equal to 35 percent to less than 43 percent; **in that** a fourth of the five activated states (A4) is defined for a channel load (CL) from greater than or equal to 43 percent to less than 51 percent, **in that** a fifth of the five activated states (A5) is defined for a channel load (CL) from greater than or equal to 51 percent to less than 59 percent; and **in that** the restricted state (Res) is defined for a channel load (CL) of greater than or equal to 59 percent.

5. Method according to claim 1, **characterized in that** the specific data transmission interval (T_{OFF}) is 40 to 80, preferably 60 ms, for the relaxed state (Rel); 80 to 120, preferably 100 ms, for a first of the five activated states (A1); 160 to 200, preferably 180 ms, for a second of the five activated states (A2); 240 to 280, preferably 260 ms, for a third of the five activated states (A3); 320 to 360, preferably 340 ms, for a fourth of the five activated states (A4); 400 to 440, preferably 420 ms, for a fifth of the five activated states (A5); and 440 to 480, preferably 460 ms, for the restricted state (Res).

6. Method according to any of the preceding claims, **characterized in that** a data transmission interval (T_{OFF}) of 100 ms is associated with the first overload control profile (DPO) of the four overload control profiles for each state (Rel, A1, A2, A3, A4, A5, Res); **in that** a data transmission interval (T_{OFF}) of 100 ms is associated with a second and third overload control profile (DP1, DP2) of the four overload control profiles for the relaxed state (Rel); a data transmission interval (T_{OFF}) of 140 ms is associated with a first activated state (A1) of the five activated states, a data transmission interval (T_{OFF}) of 180 ms is associated with a second activated state (A2) of the five activated states, a data transmission interval (T_{OFF}) of 220 ms is associated with a third activated state (A1) of the five activated states, a data transmission interval (T_{OFF}) of 260 ms is associated with a fourth activated state (A1) of the five activated states, a data transmission interval (T_{OFF}) of 300 ms is associated with a fifth activated state (A1) of the five activated states, and a data transmission interval (T_{OFF}) of 340 ms is associated with the restricted state (Res); and **in that** a data transmission interval (T_{OFF}) of 100 ms is associated with a fourth overload control profile (DP3) of the four overload control profiles for the relaxed state (Rel), a data transmission interval (T_{OFF}) of 350 ms is associated with a first activated state (A1) of the five activated states, a data transmission interval (T_{OFF}) of 600 ms is associated with a second activated state (A2) of the five activated states, a data transmission interval (T_{OFF}) of 850 ms is associated with a third activated state (A3) of the five activated states, a data transmission interval (T_{OFF}) of 1100 ms is associated with a fourth activated state (A4) of the five activated states, a data transmission interval (T_{OFF}) of 1350 ms is associated with a fifth activated state (A5) of the five activated states, and a data transmission interval (T_{OFF}) of 1600 ms is associated with the restricted state (Res).

7. Method according to any of the preceding claims, **characterized in that** Decentralized Environment Notification Messages (DENM) are transmitted via the first and/or a second overload control profile (DP0, DP1) of the four transmission profiles; and/or **in that** Cooperative Awareness (CA) messages are sent via a third transmission profile (DP2) of the four overload control profiles.

8. Method according to any of the preceding claims, **characterized in that** the wireless communication system (20) is an ad hoc network for mobile device communication.

9. Method according to any of the preceding claims, **characterized in that** the wireless communication system (20) is a ITS G5 network or an ad hoc network for mobile device communication according to a WLAN standard.

10. Apparatus for configuring a data transmission via a transmission channel of a wireless communication system (20) with local overload control (16), **characterized in that** the apparatus is configured to implement a method according to any of claims 1 to 9.

11. Apparatus according to claim 10, **characterized in that** the apparatus is a control unit (14) for a vehicle (10) or a mobile radio device.

12. Vehicle (10) comprising an apparatus according to claim 11 or 11.

13. Computer program product with program code for implementing the method according to any of claims 1 to 9 when the program product is executed on a processing unit or an apparatus according to claim 10 or 11.

## Revendications

1. Procédé permettant la configuration d'une transmission de données par un canal de transmission d'un système de communication sans fil (20) avec une régulation de surcharge décentralisée (16), dans lequel la régulation de surcharge décentralisée (16) comporte un état détendu (Rel), un état restreint (Res) et cinq états activés (A1, A2, A3, A4, A5) et dans lequel la répartition de tous les états est basée sur une charge de canal (CL) dans le canal de transmission, **caractérisé en ce que** quatre profils de régulation de surcharge (DP0, DP1, DP2, DP3) sont prévus pour une hiérarchisation lors de la transmission de données ou un accès au canal de transmission, dans lequel à chaque profil de régulation de surcharge (DP0, DP1, DP2, DP3) est attribué un intervalle de transmission de données spécifique (T_{OFF}) pour chaque état, dans lequel l'intervalle de transmission de données spécifique indique la pause entre deux émissions, respectivement entre deux accès au canal de transmission et dans lequel à un premier profil de régulation de surcharge (DP0) pour chaque état, le même intervalle de transmission de données spécifique minimum (T_{OFF}) est attribué.

2. Procédé selon la revendication 1, **caractérisé en ce que** chacun des cinq états activés (A1, A2, A3, A4, A5) est défini pour une charge de canal (CL) de six pour cent à dix pour cent, de préférence huit pour cent.

3. Procédé selon l'une quelconque des revendications précédentes, **caractérisé en ce que** l'état détendu (Rel) est défini pour une charge de canal (CL) de 0 pour cent à moins de 17 à 21 pour cent, **en ce qu'**un premier des cinq états activés (A1) est défini pour une charge de canal (CL) de 17 à 21 pour cent à moins de 25 à 29 pour cent, **en ce qu'**un deuxième des cinq états activés (A2) est défini pour une charge de canal (CL) de 25 à 29 pour cent à moins de 33 à 37 pour cent, **en ce qu'**un troisième des cinq états activés (A3) est défini pour une charge de canal (CL) de 33 à 37 pour cent à moins de 41 à 45 pour cent, **en ce qu'**un quatrième des cinq états activés (A4) est défini pour une charge de canal (CL) de 41 à 45 pour cent à moins de 49 à 53 pour cent, **en ce qu'**un cinquième des cinq états activés (A5) est défini pour une charge de canal (CL) de 49 à 53 pour cent à moins de 57 à 61 pour cent et **en ce que** l'état restreint (Res) est défini pour une charge de canal (CL) de 57 ou plus à 61 pour cent.

4. Procédé selon les revendications précédentes 1 et 2, **caractérisé en ce que** l'état détendu (Rel) est défini pour une charge de canal (CL) de 0 pour cent ou plus à moins de 19 pour cent, **en ce qu'**un premier des cinq états activés (A1) est défini pour une charge de canal (CL) de 19 pour cent ou plus à moins de 27 pour cent, **en ce qu'**un deuxième des cinq états activés (A2) est défini pour une charge de canal (CL) de 27 pour cent ou plus à moins de 35 pour cent, **en ce qu'**un troisième des cinq états activés (A3) est défini pour une charge de canal (CL) de 35 pour cent ou plus à moins de 43 pour cent, **en ce qu'**un quatrième des cinq états activés (A4) est défini pour une charge de canal (CL) de 43 pour cent ou plus à moins de 51 pour cent, **en ce qu'**un cinquième des cinq états activés (A5) est défini pour une charge de canal (CL) de 51 pour cent ou plus à moins de 59 pour cent et **en ce que** l'état restreint (Res) est défini pour une charge de canal (CL) de 59 pour cent ou plus.

5. Procédé selon la revendication 1, **caractérisé en ce que** l'intervalle de transmission de données spécifique (T_{OFF}), pour l'état détendu (Rel), est de 40 à 80, de préférence 60 ms, pour un premier des cinq états activés (A1) de 80 à 120, de préférence 100 ms, pour un deuxième des cinq états activés (A2) de 160 à 200, de préférence 180 ms, pour un troisième des cinq états activés (A3) de 240 à 280, de préférence 260 ms, pour un quatrième des cinq états activés (A4) de 320 à 360, de préférence 340 ms, pour un cinquième des cinq états activés (A5) de 400 à 440, de préférence 420 ms et pour l'état restreint (Res) de 440 à 480, de préférence 460 ms.

6. Procédé selon l'une quelconque des revendications précédentes, **caractérisé en ce que,** au premier profil de régulation de surcharge (DPO) des quatre profils de régulation de surcharge pour chaque état (Rel, A1, A2, A3, A4, A5, Res), un intervalle de transmission de données (T_{OFF}) de 100 ms est attribué, **en ce qu'**à un deuxième et un troisième profil de régulation de surcharge (DP1, DP2) des quatre profils de régulation de surcharge pour l'état détendu (Rel), un intervalle de transmission de données (T_{OFF}) de 100 ms est attribué, pour un premier état activé (A1) des cinq états activés, un intervalle de transmission de données (T_{OFF}) de 140 ms est attribué, pour un deuxième état activé (A2) des cinq états activés, un intervalle de transmission de données (T_{OFF}) de 180 ms est attribué, pour un troisième état activé (A3) des cinq états activés, un intervalle de transmission de données (T_{OFF}) de 220 ms est attribué, pour un quatrième état activé (A4) des cinq états activés, un intervalle de transmission de données (T_{OFF}) de 260 ms est attribué, pour un cinquième état activé (A5) des cinq états activés, un intervalle de transmission de données (T_{OFF}) de 300 ms est attribué et pour l'état restreint (Res), un intervalle de transmission de données (T_{OFF}) de 340 ms est attribué et **en ce qu'**à un quatrième profil de régulation de surcharge (DP3) des quatre profils de régulation de surcharge, pour l'état détendu (Rel), un intervalle de transmission de données (T_{OFF}) de 100 ms est attribué, pour un premier état activé (A1) des cinq états activés, un intervalle de transmission de données (T_{OFF}) de 350 ms est attribué, pour un deuxième état activé (A2) des cinq états activés, un intervalle de transmission de données (T_{OFF}) de 600 ms est attribué, pour un troisième état activé (A3) des cinq états activés, un intervalle de transmission de données (T_{OFF}) de 850 ms est attribué, pour un quatrième état activé (A4) des cinq états activés, un intervalle de transmission de données (T_{OFF}) de 1100 ms est attribué, pour un cinquième état activé (A5) des cinq états activés, un intervalle de transmission de données (T_{OFF}) de 1350 ms est attribué et pour l'état restreint (Res), un intervalle de transmission de données (T_{OFF}) de 1600 ms est attribué.

7. Procédé selon l'une quelconque des revendications précédentes, **caractérisé en ce que,** sur le premier et/ou un deuxième profil de régulation de surcharge (DPO, DP1) des quatre profils de transmission, des messages de notification d'environnement décentralisé (DENM) sont envoyés et/ou **en ce que,** sur un troisième profil de transmission (DP2) des quatre profils de régulation de surcharge, des messages de sensibilisation coopératifs (CAM) sont envoyés.

8. Procédé selon l'une quelconque des revendications précédentes, **caractérisé en ce que** le système de communication sans fil (20) est un réseau ad-hoc pour la communication d'appareils mobiles.

9. Procédé selon l'une quelconque des revendications précédentes, **caractérisé en ce que** le système de communication sans fil (20) est un réseau ITS G5 ou un réseau ad-hoc pour la communication d'appareils mobiles selon une norme WLAN.

10. Dispositif permettant la configuration d'une transmission de données sur un canal de transmission d'un système de communication sans fil (20) avec une régulation de surcharge décentralisée (16), **caractérisé en ce que** le dispositif est conçu pour réaliser un procédé selon l'une quelconque des revendications 1 à 9.

11. Dispositif selon la revendication 10, **caractérisé en ce que** le dispositif est un appareil de commande (14) pour un véhicule (10) ou un téléphone mobile.

12. Véhicule (10) comportant un dispositif selon la revendication 11 ou 11.

13. Produit de programme informatique comprenant un code de programme pour la réalisation du procédé selon l'une quelconque des revendications 1 à 9, lorsque le produit de programme est exécuté sur une unité de calcul ou un dispositif selon la revendication 10 ou 11.
